# EUROPEAN PATENT APPLICATION

(11) **EP 0 883 074 A2**
(43) Date of publication of application: **09.12.1998**
(21) Application number: 98201250.2
(22) Date of filing: 17.04.1998
(51) Int. Cl.: G06F 17/60

(54) **Processes for cutting skins, and associated intermediate product**

(30) Priority: 03.06.1997 IT PD970117
(71) Applicant: Balsira S.A., Roveredo, Grigioni (CH)
(72) Inventor: Johnston, Christopher C., New Orleans (US); Palmieri, Claudio, 6821 Rovio/Ticino (CH)
(74) Representative: Cantaluppi, Stefano

(57) **Abstract**

In a first analysis stage (100, 101, 102) the characteristics of size and shape of the skin are determined, and a so-called nesting plan is preferably also defined in order to optimise the use of the material available at the cutting stage. The corresponding data are stored in a file (103) in positions distinguished by respective codes identifying each skin analysed. At the time of cutting, which may take place at a substantial distance of time and space from the analysis operation, each skin is positioned on the cutting station (106) and the associated data are retrieved (104) from the file (103). When the outline of the positioned skin has been aligned exactly with the outline already in the memory, by processing the above data, the cutting operation is carried out on the basis of the nesting plan already stored in the memory, or on the basis of a new nesting plan defined in situ by the operator.

## Description

The present invention relates generally to the cutting of skins in the industrial field.

In the course of recent years, this field has been the subject of fairly extensive research and innovation activity, as demonstrated also by the number of patent applications.

For example, EP-B-0 237 555 describes a process and a device for cutting the outline of flat objects, such as skins in the field of leatherwork, as a function of parameters relating to the peripheral appearance of the object concerned. A video camera generates an image of a portion of the outline of the object which is then converted into a matrix of digital codes for the purpose of the subsequent digital calculation of the points representative of the cutting layout. The cutting layout is then stored in the memory in order to carry out a series of tests based on programmed criteria in order to provide information for the generation of data which are finally used to control the cutting of the skin automatically.

US-A-4 941 183, however, describes a process and an apparatus in which the operation of cutting the material is optimised as a function of a plurality of models (so-called templates) or predetermined shapes. In particular, an optimising operation is provided for in order to minimise the cutting waste as a function of the cut parts which it is desired to obtain.

A similar objective forms the subject matter of WO 92/08811 which describes a process for the automatic cutting of skins in which the defects of the skin and the outlines thereof are stored in digital form. The skin is identified and transferred to a cutting table by means of a semi-rigid support to which the skin is removably fastened and which may be rolled up with this skin without producing any relative movement. The cut parts can therefore be removed without damaging the skin and leaving undesired marks.

In addition, US-A-5 258 917 describes a completely automatic method for effecting the so-called nesting of the outlines which have to be cut from a skin which may have structural and material defects. The above nesting operation is intended to permit optimum arrangement of the outline of the parts to be cut, this arrangement being effected taking into account the overall profile of the skin or the parts thereof considered useful for cutting, after identification of any defects or parts that cannot be used. The aim is to optimise the use of the material, minimising waste. Substantially analogous aims are described in EP-A-0 750 048.

Although interesting, the solutions according to the prior art have not satisfactorily dealt with some major problems which occur in the treatment and above all the cutting of skins on an industrial scale.

In particular, a basic problem is that of optimising the work cycles, which requirement conflicts directly with the solution nearly always adopted of subjecting the skins in sequence to the operations of determining the outlines, determining any errors, nesting, with subsequent cutting of the skin on the basis of the results of the operations carried out previously. This is carried out with the optional use of a single apparatus used first for the functions of analysing the skin and then for cutting it, or of apparatus having stations in cascade arrangement, the first being used for carrying out the analysis operations and the second being used for carrying out the cutting operations.

The invention has the characteristics claimed specifically in the Claims which follow and is based on the recognition of the fact that the above-mentioned analysis operations (recognition of the outline of the skin, presence of any defects, nesting) can be completely separate, both in spatial terms and in terms of the time of the actual cutting operation. This consequently provides for the possibility, for example, of using all the cutting stations available in an installation, precisely to carry out the cutting operation, without obstructions or delays dictated by the requirement to carry out the above analysis operations in parallel, those operations having already been carried out beforehand in order to obtain and store data which may be used subsequently to carry out the cutting operation.

Consequently, in the currently preferred embodiment, the process according to the invention lends itself to being carried out in two successive periods or stages, which can also be carried out separated from one another by a time interval and/or also in positions in installations located at a distance from one another.

The first stage substantially comprises the following operations:
- arranging the skin on a measuring device which determines (in a manner known per se) the basic characteristics thereof: area, outline, presence of any defects (or, at any rate, regions which cannot be used for the intended purpose),
- definition of a preliminary nesting,
- storing the data relating to the above measurements and nesting in the form of data, typically digital data stored on a suitable support, which are filed after assigning to the corresponding set of data an identifying code, which is preferably reproduced on the skin which can thus be returned to store with a view to subsequent use.

It is thus possible to form a file which, for all the skins available "in store", already contains the identifying and characteristic data of each skin together with a preliminary proposal for nesting as a function of the characteristics of the pieces which are to be cut from those skins.

The second stage provides that, for example, as a function of the data relating to the nesting and stored in the file (for example, because it is desired to go on to processing specific parts and it is known that the store contains a given number of skins of which the nesting provides for the possibility of cutting such parts), the skin is removed from the store, placed on a work-table, or arranged on a conveyor belt which is preferably caused to advance until the skin is placed completely on the table, and the data previously stored in the memory and relating to the skin are retrieved from the electronic file.

There then follows the automatic orientation of the data relating to the image of the skin with respect to the skin itself by adjusting the above file data until exact alignment is achieved with the position currently adopted by the positioned skin, and therefore without having to place the skin in exactly the same position as it had assumed during the analysis stage. The skin is finally cut after optional redefinition of the nesting plan originally defined in the analysis stage, if that plane no longer corresponds to the current operating requirements.

The invention thus permits the creation of an off-line file of the images (and, in general, the data) relating to the skins to be used later for cutting. It is therefore possible to optimise the use of the cutting stations since they can be employed continuously for the cutting operations using the analysis data collected and stored in the memory beforehand, even at a substantial distance of time and space.

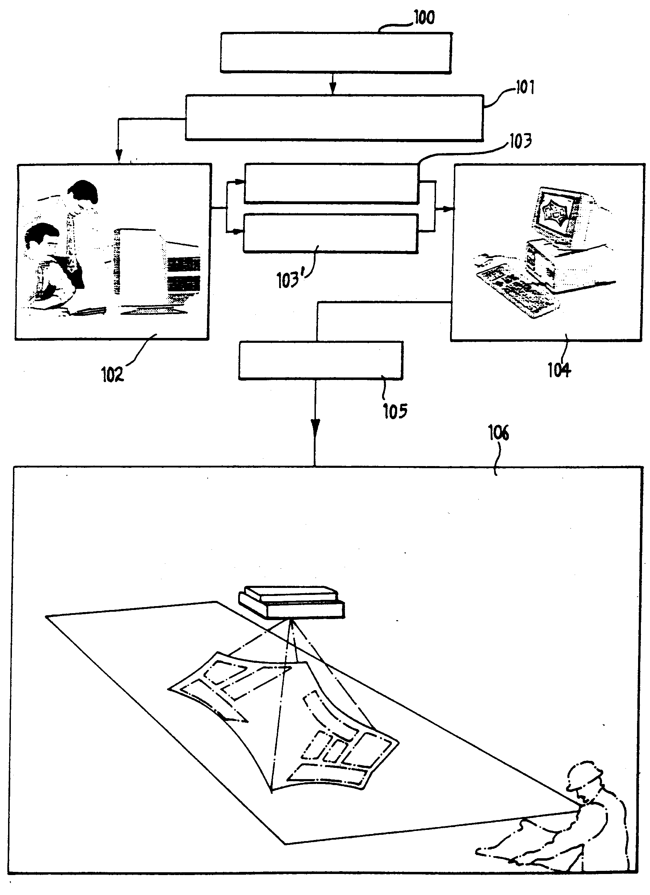

The invention will now be described purely by way of non-limiting example with reference to the appended drawing which represents, in the form of a schematic flow chart, the performance of the process according to the invention.

It should be noted that the individual operations represented by the blocks of the appended schematic diagram are to be considered as being known per se, also as regards the characteristics of the apparatus (measuring means, outlining means, etc.) which can be used to effect the individual operations in question. In this connection, it may be useful to refer to the patent documents mentioned in the introduction to the present description.

The first step, indicated 100, of the process according to the invention, is to place the individual skin to be used in an analysis station (measuring means) in order to proceed, after scanning the skin by means of a scanning device, such as a video camera, with the determination of the following data (collected in digital form in accordance with well-known techniques):
- outline of the skin,
- surface area of the skin,
- presence of any defects and/or identification of regions which cannot be used for the proposed processing purposes.

When these data have been determined and processed in step 101 (for example in DXF, DVG or IGES formats, in accordance with the most common techniques) they are transmitted to a processing station/stage represented by step 102. In this stage, the so-called definition of the nesting plan is usually also carried out, that is to say, the optimisation of the use of the surface area of skin available and of the outline thereof as a function of the profile of the parts which are to be cut. This operation is one that can be carried out completely automatically or in accordance with typical forms of man-machine interaction. The nesting plan can be processed for an individual skin or for a so-called batch of skins, in which case optimisation will be in respect of the use of the total surface area of a group of skins which has previously been identified and which is associated, for example, with a specific production to be obtained.

The result of stage 102 is the creation of a file (stage 103) in which the basic data relating to the skin are stored (in the form of respective files, each corresponding to a respective skin, identified by a digital or equivalent code - for example a bar code - which is usually reproduced on the skin itself in order to permit the effective identification thereof when it has been replaced in the store). Referring back to the list given above, which is given purely by way of non-definitive example, the information concerned may be data such as surface area, outline, any regions which are not usable, also with the data relating to the originally proposed nesting plan.

The above file may be in the form of a support (such as a floppy disk, an optical disk, etc.) on which the above-mentioned data are stored in a stable manner (except, of course, that it is possible to erase the contents if the support is reused, when permissible).

Whether the file is one which is located physically in an installation, and which is thus accessible locally or remotely by means of an IT network, or whether it is data stored on a support, the file 103 can be interrogated (even at a substantial distance of time and space from its creation) at the moment when it is desired to use the skin identified by a particular code.

Significantly, the identification of that code can be effected on the basis of the data relating to the nesting. For example, when production demands require that a given number of cut parts be produced, it is possible to search the file 103 in known manner in order to identify automatically the codes of all the skins available in store which provide for the production of the above-mentioned part of interest in their nesting plan. There is also the further possibility of optimising the identification of the skins to be processed as a function of other criteria (for example skins which have been available for some time, skins which, while having the same ability to produce the part, have a smaller overall surface area, an overall qualitative level of the skins according to the quality of the finished product which it is intended to produce, etc.).

The above data thus retrieved from the file 103 in a search or retrieval stage shown diagrammatically by the step 104 can then be used in a subsequent stage 105 for automatically controlling the station which cuts the skins in a subsequent stage 106.

For the sake of completeness, the appended schematic diagram shows the stage marked 103'. This simply indicates that the stage of creating the file 103 does not necessarily involve a more or less prolonged wait before proceeding with the retrieval of the information with a view to carrying out the cutting operations. Consequently, the data constituting the file discussed above, instead of being stored in the memory for a more or less extended time interval, can be transferred directly from the stage in which they are processed (stage 102) to the retrieval operation (stage 104) when production demands require a direct connection between the analysis zone and the work region.

In the latter stage, it is provided that the skins identified at a particular time are positioned on the cutting tables where, by means of scanning units substantially the same as those used in the analysis stage (for example, having cameras with associated laser projection functions or the like), the outline of the skin is determined again in order to be compared (using algorithms known from image-processing techniques, which need not be recalled here) with the outline data stored in the memory and taken from the file 103 (or resulting directly from the processing 102, in the case where the stage represented by the block 103' is adopted) in order to obtain exact alignment (superimposition) between the two outline images.

In the currently preferred embodiment of the invention, instead of using operations for orientating the skin positioned on the cutting station in an attempt to achieve the realignment of the instantaneous image of the skin with the image previously stored in the memory, the operation of realignment or superimposition is carried out using an opposing movement, of substantially virtual nature, that is to say, by determining by means of the processing unit 104 (of known type) which takes the data from the file and transfers them to the cutting unit, the translation and/or rotation of the image corresponding to the data stored in the memory, until the desired superimposition is achieved with the desired margin of accuracy (for example of the order of ± 1 mm in the positioning of the outlines of the parts which are to be cut).

The spatial repositioning (translation and/or rotation) of the outline data of course involves a homologous repositioning of the data relating to nesting. The cutting station thus has automatically at its disposal data, already processed beforehand, for carrying out the cutting operation under optimum conditions. Naturally, the above-mentioned data relating to nesting can in any case be displayed externally, for example, on the screen of the processing unit which monitors the performance of stages 104, 105 and 106, in order to enable an operator to check whether the nesting plan previously defined at a preliminary level can be regarded as satisfactory in all respects for the current working requirements. The operator can then proceed, in accordance with the same methods adopted in stage 102, with any redefining of the nesting plan. The purpose of the above is finally to impart to the command unit which controls the cutting unit, the operating command which brings about the cutting operation (effected in accordance with criteria and using apparatus widely known per se, for example, on the basis of an especially preferred solution, using a pressurised water jet cutting unit).

Naturally, the principle of the invention remaining the same, the details of construction and forms of embodiment may be varied widely with respect to those described and illustrated, without thereby departing from the scope of the present invention.

## Claims

1. A process for processing skins that are to be cut, characterised in that it comprises the operations of:
- assigning to each skin at least one respective identifying code,
- subjecting the skin to an analysis (100, 101) of its characteristics, with the consequent generation of data identifying at least the outline of the skin and, preferably, a so-called nesting plan (102) for cutting the skin, and
- organising the above data in the form of a file (103, 103') from which the geometric data relating to each skin are retrievable on the basis of the code assigned to the skin.

2. A process for subjecting skins subjected to the process according to Claim 1 to cutting, characterised in that it comprises the operations of:
- retrieving (104) from the file (103, 103'), on the basis of the identifying code, the geometric data corresponding to a given skin,
- positioning the given skin in a cutting station (106),
- causing the outline of the skin positioned in the cutting station (106) to coincide with the outline identified by the data retrieved from the file (103, 103'), and
- cutting the skin on the basis of the data retrieved once the above coincidence has been achieved.

3. A process according to Claim 2, characterised in that the coincidence is achieved by the spatial repositioning of the outline identified by the data retrieved (104) from the file (103).

4. A process according to Claim 2 or Claim 3, characterised in that, when the above coincidence has been achieved, the nesting plan is redefined before proceeding with the cutting operation (106).

5. An intermediate product of the process according to any one of Claims 1 to 4, the intermediate product comprising:
- a skin identified by a respective identifying code, and
- a respective collection of geometric data relating to the skin and stored in a file (103) and retrievable (104) from that file on the basis of the identifying code.

6. A process for subjecting the intermediate product according to Claim 5 to cutting, characterised in that the operations according to any one of Claims 2 to 4 are carried out on the intermediate product.
